(19) Europäisches Patentamt / European Patent Office / Office européen des brevets

(11) **EP 2 868 373 A1**

(12) **EUROPEAN PATENT APPLICATION**

(43) Date of publication:
06.05.2015 Bulletin 2015/19

(51) Int Cl.:
*B01J 19/00* (2006.01)    *B01J 19/08* (2006.01)

(21) Application number: 13306516.9

(22) Date of filing: 05.11.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Centre National de la Recherche Scientifique**
**75016 Paris (FR)**

(72) Inventors:
- **DOUDIN, Bernard**
  **67000 STRASBOURG (FR)**
- **ZANETTINI, Silvia**
  **67100 STRASBOURG (FR)**

- **FARAMARZI, Vina**
  **67100 STRASBOURG (FR)**
- **HERTEL, Riccardo**
  **67300 SCHILTIGHEIM (FR)**
- **ANDREAS, Christian**
  **67200 STRASBOURG (FR)**
- **LUNCA POPA, Petru**
  **91940 LES ULIS (FR)**

(74) Representative: **Reboussin, Yohann Mickaël Noël et al**
**Cabinet Orès**
**36, rue de St Pétersbourg**
**75008 Paris (FR)**

(54) **A device for controlling a chemical reaction by a magnetic field and use of said device.**

(57)    The invention relates to a device (100) for controlling a chemical reaction, said device having:
- a container (13) comprising a solution (30) including at least one paramagnetic species;
- at least one electrode (20, 21) comprising at least one ferromagnetic material, said at least one electrode being dived in said solution;
- a means for applying an external magnetic field ($H_0$) so as to magnetize said electrode (20, 21), the combination of the external magnetic field ($H_0$) and the magnetization (M) of said electrode creating a magnetic induction field (B) in the electrodes (20, 21) and the container (13); characterized in that said at least one electrode (20, 21) has either no cover layer of a non-ferromagnetic separating said electrode from the solution (30) or comprises a cover layer, which thickness is less than 40nm, of a non-ferromagnetic material separating said electrode (20, 21) from the solution (30).

*Fig. 3*

**Description**

The invention relates to the control of chemical reactions by a magnetic field.

More particularly, the invention relates to a device for controlling a chemical reaction by magnetic field and to a method associated thereof.

Said control may consist in controlling the equilibrium constant of the chemical reaction and/or its kinetics.

The influence of magnetic fields on chemical reactions is already known in the art.

This is the case in the article "High magnetic fields in chemistry", U.E. Steiner & P. Gilch, High Magnetic Fields.ed. by Fritz Herlach and N. Miura, World Scientific, 2003 **(D1)**.

In particular, D1 reports that the value of a constant external magnetic field has an impact on the variation of the equilibrium constant of a chemical reaction (Chapter "Thermodynamic equilibrium"; pages 18-19).

The relative variation of the equilibrium constant depends on the square of the applied magnetic field $B_0$ and is inversely proportional to the absolute temperature T.

However, very low changes of the equilibrium constant K are observed: $\Delta K/K = 1.6*10^{-5}$ for $B_0$ = 1 Tesla at room temperature and, at $B_0$ = 23 Tesla, the extent by which the equilibrium is shifted corresponds to an increase of 0.4 K of the temperature in the absence of external magnetic field. This corresponds to a thermal energy smaller than 0.1 meV.

Such small variation is associated with the limited amplitude of the Zeeman splitting energy, lifting the degeneracy of the two electrons spin states, which impacts the influence of the spin in quantum conservation rules in chemical reactions.

This article shows that the influence of the application of an external magnetic field on a solution in which a chemical reaction arises is in practice negligible and requires very large applied magnetic field, typically 10 to 30 Teslas.

N.B. Chaure & al., "Design and application of a magnetic field gradient electrode", Electrochemistry Communications 9 (2007), pp. 155-158 (D2) is another article in which the influence of a magnetic field on a chemical reaction is shown.

In this article, the authors take advantage of the properties of paramagnetic species (ions) involved a chemical reaction arising in a solution. Under the application of a magnetic field, such paramagnetic species experience a force which depends on the product between said magnetic field and its gradient (product = $\nabla B^2$). To generate a displacement of the paramagnetic species, and thus to modify the conditions in which the chemical reaction occurs, the authors suggest to increase the magnetic field gradients.

In that aim, they propose to dive an electrode in the solution.

The basis of the electrode is a porous alumina membrane with 200 nm pore diameter and CoPt nanorods, deposited into the pores and partially filling the nanopores. The electrode has its own embedded permanent magnets to generate the magnetic field (CoPt nanorods). The membrane is covered by a planar deposit of Ag (150 nm thick), and the Ag layer is covered by a Pt layer (50 nm thick; non ferromagnetic material), which forms the electrode surface.

Such a structure is designed for maximizing both the magnetic field and the magnetic field gradient around the longitudinal axis of the CoPt nanorods.

The authors report, at the level of the Pt electrode surface, a magnetic field of $2.10^{-2}$ T and a magnetic field gradient of 0.5 to $2*10^5$ T.m$^{-1}$, namely a quantity $\nabla B^2$ of the order of $10^3$ T$^2$.m$^{-1}$.

In an application where the electrolyte/solution is a borate buffer, the authors mention that the influence of the magnetic field on the equilibrium constant K is negligible.

However, the presence of the electrode greatly influences the magnetic field gradient, even with a low magnetic field, and appears to have an influence on the convection of the paramagnetic species in the electrolyte/solution. Convection of the paramagnetic species in then inhibited at the vicinity of the electrode surface what suggests that the equilibrium constant may be influenced. No influence on the diffusion process of the paramagnetic species in the solution is noted.

N. B. Chaure & al. have proposed an improvement of the method disclosed in D2, presented in the article **(D3)** entitled "Enhanced Oxygen Reduction at Composite Electrodes Producing a Large Magnetic Gradient", J. of the Electrochemical Society, 156 (3) F39-F46 (2009).

Compared to article D2, the authors propose to use a means for applying an external magnetic field in the electrode, comprising a ferromagnetic material (Co nanorods, for example) which then generates an induced magnetic field. Accordingly, the magnetic field reached (0.4T to 1T) at the surface electrode (Pt) is higher than the magnetic field obtained at the surface electrode (Pt) in article D2 (25mT).

Several electrodes are compared but the best design is similar to the electrode proposed in D2, except that CoPt is replaced by Co.

Thanks to that, they obtain a quantity $\nabla B^2$ of the order of $10^5$ T$^2$.m$^{-1}$, namely a factor 100 (two orders of magnitude) larger than the value of $\nabla B^2$ in article D2. Expressed in term of maximum magnitude of the gradient force density generated, a numerical application provides a value of the order of $10^4$ N.m$^{-3}$ (for a molar magnetic susceptibility of $\chi_m = 2\text{-}4.10^{-8}$ m$^3$.mol$^{-1}$ and a concentration c of paramagnetic species of 0.01 M, namely a product $c\chi_m = 2\text{-}4.10^{-7}$).

The authors show that a change in oxygen reduction rates at surfaces can occur when large attractive gradient forces exist. This requires a specific bath composition and a specific electrode surface (Pt). The origin of the effect remains ambiguous, as it is possible that the Lorentz forces acting when a charge flow occurs (or current in the circuit) can influence the reactions. This force, proportional to the induction field and the velocity of the ions, can change the hydrodynamic properties of the electrolyte.

However, even with these improvements, no advanced control of the chemical reaction may be made. Moreover, the presented applications are restricted to the process of oxygen reduction.

An aim of the invention is to propose a device which does not present at least one of the drawbacks mentioned here above.

To reach this aim, the invention proposes a device according to claim 1. Other features of this device are proposed in the dependent claims.

The invention also proposes different uses of this device.

The invention shall be better understood, and other aims, advantages and features will appear by reading the following description, written in regard of the accompanying drawings, on which:

- Figure 1(a) is a scheme of a cell which can be used for implementing a method according to the invention;
- Figure 1(b) is an optical image corresponding to close-up view of a part of interest of the cell of figure 1(a);
- Figure 1(c) is a close-up view of figure 1(b) at the level of the working electrodes, obtained by electron microscopy;
- Figure 2 shows, by means of electron microscopy, an alternative design to the working electrodes shown in figure 1(c);
- Figure 3 is a scheme of a device according to the invention, with the electrodes of figure 2 and the source of external magnetic field $H_0$;
- Figure 4(a) shows the gradient force density resulting of a simulated application of an external magnetic field with the device of figure 3 in the case where said external magnetic field has a first orientation with respect to the electrodes ;
- Figure 4(b) shows the gradient force density resulting of a simulated application of an external magnetic field with the device of figure 3 in the case where said external magnetic field has a second orientation with respect to the electrodes;
- Figure 5(a) is a schematic view of the electrical behaviour of the electrodes when the external magnetic field is in the first orientation;
- Figure 5(b) is a schematic view of the electrical behaviour of the electrodes when the external magnetic field is in the second orientation;
- Figure 6(a) shows an experimental result of the electrical conductance between the electrodes as a function of the angle between the orientation of the external magnetic field and the electrodes, where said electrodes, comprising Nickel, are dived in a solution comprising Ni ions;
- Figure 6(b) shows an experimental result of the electrical conductance between the electrodes as a function of the angle between the orientation of the external magnetic field and the electrodes, where said electrodes, comprising Nickel, are dived in a solution having no Ni ions;
- Figure 7(a) shows the result of an experiment with the device of figure 3 giving the evolution of conductance between the electrodes as a function of time, in the case where the external magnetic field magnitude varies over time;
- Figure 7(b) and 7(c) both show the evolution of the conductance of figure 7(a) as a function of the evolution of the magnitude of the external magnetic field;
- Figure 8 shows a single electrode which ferromagnetic material is covered by a layer of a non-ferromagnetic material;
- Figure 9(a) shows two electrodes disposed face to face, one of which comprising a cover layer of a non-ferromagnetic material and Figure 9(b) shows two electrodes disposed face to face both comprising such a cover layer.

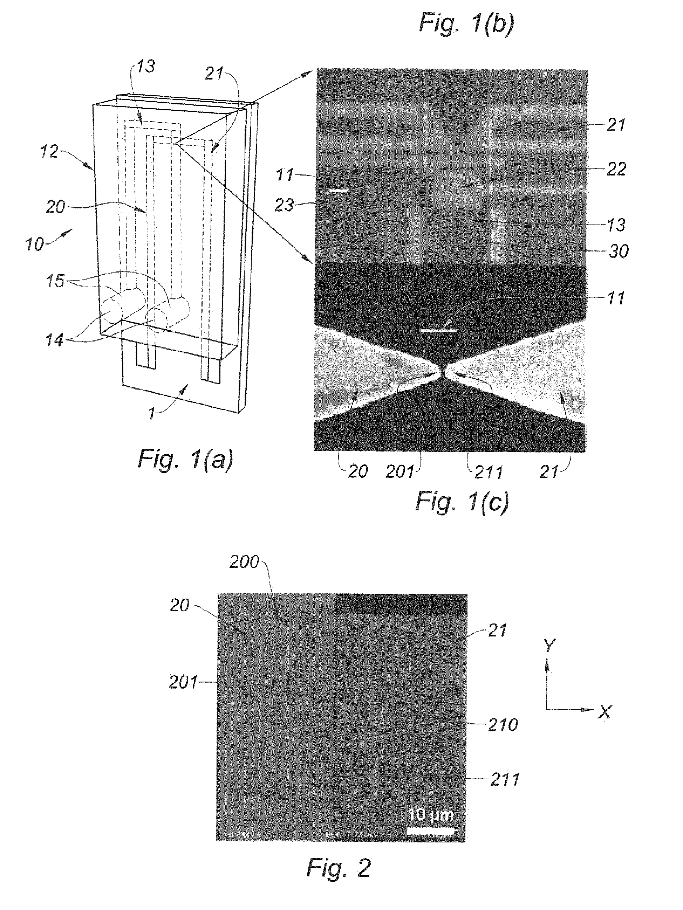

A way to obtain the cell 10 of figure 1(a) is described hereinafter.

An initial pair of electrodes separated by a few micrometers gap (for example a $5\mu$m gap) is patterned over Si/SiO$_2$ wafer 1 by standard optical UV lithography using reversible AZ5214 resist. A double layer of Ti(5nm)/Au(50nm) (Au = top part, Ti = bottom part improving the Au adhesion on the substrate) are then e-beam evaporated, followed by a lift-off in acetone, to obtain the metallic electrodes. The inter-electrode distance (gap) is then decreased down to a value, for example comprised between 1 nm to 100nm, by patterning two tips (ends of the electrodes) face to face using e-beam lithography. At this point, we obtain a sample having metallic electrodes 20, 21 on a Si/SiO$_2$ wafer 1. We note that said electrodes 20, 21 are made of ferromagnetic materials.

Fabrication of the PDMS structure 12 for the electrolyte/solution starts by creating an SU-8 master template defined by optical lithography, where a reversed image of the microfluidic channels is patterned in SU-8 spin coated onto a silicon wafer. A commercially available PDMS elastomer, Sylgard 184 from the company Dow Corning, may be used to be poured over the SU-8 master. The elastomer is mixed with a baking agent in 10 to 1 ratio and a vacuum pump dessicator is used to remove air bubbles from the mixture. The viscous PDMS solution is poured over the master and cured at 65°C for 1h, after which the replica is peeled away from the master.

Access to the microfluidic circuitry 13 is obtained by using a biopsy punch to make holes 14 in the PDMS 20.

To ensure sticking between the PDMS 20 and the sample, oxygen plasma under RF power is used to activate surface chemical bonds in both the PDMS and the silicon.

Alignment of the microfluidic inlet channels 14 with the patterned electrodes 20, 21 is then performed under microscope to ensure a precise positioning of the channel 13 over the electrodes 20, 21 (figure 1(b)).

This is important to define, at the level of the gap between the electrodes 20, 21, a volume filled with the electrolyte/solution in which said electrodes are dived.

Plastic tubes 15 are introduced into the holes 14 of the PDMS 13, with eventually UV polymerizing glue to prevent any leaks.

The fabrication process of the cell 10 is then terminated.

The typical cell 10 built in this way is about 100 $\mu$m wide and 40 $\mu$m high (figure 1(a)).

In figures 1(a) and 1(b), it should be noted that the horizontal bar scale 11 corresponds to 200nm. The gap between the ends 201, 211 of the electrodes 20, 21 is clearly less than 100nm. In figure 1(b), we can also see a counter electrode 22 and a reference electrode 23. The electrodes of interest (working electrodes) are the electrodes 20, 21 which a close-up view is shown in figure 1(c). In figure 1(b), reference 30 corresponds to the electrolyte/solution.

Further information on the fabrication process of the cell may be obtained in "Heteronanojunctions with atomic size control using a lab-on-chip electrochemical approach with integrated microfluidics", Lunca Popa & al., Nanotechnology 22 (2011) 215302, pp 1-7.

To finally obtain a device 100 according to the invention, an external means for applying an external magnetic field ($H_0$) trough the cell is installed. This field magnetizes the ferromagnetic electrodes 20, 21 (with resulting magnetization M) and generate an induced magnetic field, B. The resulting created induction field B is written as $\vec{B} = \mu_0(\vec{H} + \vec{M})$, where M is the local magnetization and H the local magnetic field. Inside a ferromagnetic material $\vec{B} \approx \mu_0\vec{M}$, as its magnetization M dominates. Outside the magnetic material, $\vec{M} \approx 0$ and $\vec{H} = \vec{H_0} + \vec{H_M}$ involves the sum of the external magnetic field $\vec{H_0}$ and the field $\vec{H_M}$ generated by the magnetization of the electrodes, so that $\vec{B} = \mu_0(\vec{H_0} + \vec{H_M})$.

The external magnetic field $H_0$ can be generated with different means, well-known of the person skilled in the art.

For the experiments shown here, we use an electromagnet 100' capable of creating a field of $H_0 = 1$ T in a 8mm wide bore, that can be rotated in space. This is a so-called portable electromagnet, with a weight not exceeding a few tens of kilos, without necessary cooling fluids.

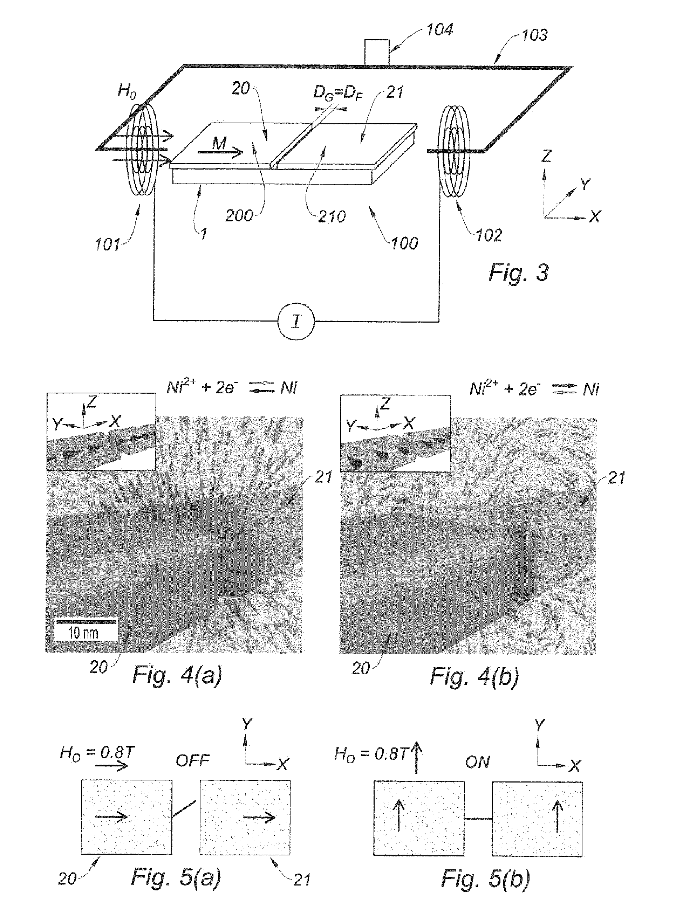

This electromagnet 100' is illustrated in figure 3, together with the device 100 with the electrodes 20, 21 of figure 2. The electromagnet 100' comprises two windings 101, 102 arranged to opposite sides of the device 100, with a magnetic core 103 and means 104 for rotating the windings together with the magnetic core 103 around the Y-direction. Said means 104 makes possible the change of direction of the external magnetic field $H_0$ and hence the change of direction of the magnetization M of the electrodes. The magnitude of the external magnetic field $H_0$ may be changed by varying the intensity I of the current circulating into the windings 101, 102, also in order to change the orientation of the magnetization M of the electrodes.

Instead of an electromagnet, a superconducting magnet may be used in the device of figure 3.

Mechanical rotation of said means for generating the external magnetic field $H_0$ and/or of the device itself can achieve the same goals. For example, we may have, as well known from the person skilled in the art, a set of permanent magnets which can rotate around the device 100 in order to change the magnitude of $H_0$. Rotation of the device 100 with respect to the set of permanent magnets allows varying the orientation of the external magnetic field $H_0$. In both cases, we may then change the orientation of the magnetization M in the electrodes.

Of course, in a more simple case where variation of the orientation of said magnetization is not necessary, a permanent magnet may be used in conjunction with ferromagnetic electrodes having remanence properties. In that case, the external permanent magnet initiates magnetization of the electrodes. Magnetization of the device can persist after reducing $H_0$ down to zero.

In figure 1(c), we can observe that the working electrodes 20, 21 (ferromagnetic) are arrow-shaped. It should be noted that other shapes of electrodes 20, 21 may be used.

An alternative embodiment for these electrodes is shown in figure 2. In that case, the ends 201, 211 of the electrodes 20, 21 are planar. The electrodes of figure 2 are also those which are represented in figure 3, together with the external means 101, 102 for applying the external magnetic field $H_0$.

It should be noted that, for the planar electrodes of figure 2, the fabrication process of the electrodes for reaching small gaps, typically between 1nm and 100nm, involve high-resolution electron beam lithography. Optical lithography combined with angle deposition methodologies as proposed in nanotrench for nano and micro particle electrical interconnects, J.F. Dayen & al., Nanotechnology, 21, 335303 (2010), can also be used as simpler alternatives. The fabrication of the remaining of the cell 10 is unchanged.

In addition, in the cell of figure 1(a), the microfluidic circuitry 13 has a specific shape but other shapes may be provided. The important aspect is that a container 13 may be defined to dive the electrodes 20, 21 in an electrolyte/solution. In the present case, the electrodes 20, 21 are then integrally made of a ferromagnetic material 200, 210 respectively which is in direct contact with the solution 30. The inter-electrode distance $D_G$ equals the distance $D_F$ between the corresponding ferromagnetic materials 200, 210 of the electrodes 20, 21 (see figure 3).

By using the device of figure 3 (with means for applying an external magnetic field $H_0$) together with the working electrodes of figure 2, a study of the chemical reaction CR (redox):

$$Ni^{2+} \text{ (paramagnetic species)} + 2e^- \leftrightarrow Ni \text{ (CR) has been carried out.}$$

It is reminded that paramagnetic ions with a concentration c (mol.m$^{-1}$) in a solution and a molar magnetic susceptibility $\chi_m$ (m$^3$.mol$^{-1}$) experience a gradient force density F (N.m$^{-3}$) which is of the form:

$$\vec{F} = \frac{c\chi_m}{2\mu_0} \vec{\nabla} B^2 \qquad (EQ1)$$

with:
$\mu_0 = 4\pi.10^{-7}$ T.m.A$^{-1}$
B, the magnetic field induced in the ferromagnetic electrodes 20, 21 by the application of the external magnetic field $H_0$.
F is often called "gradient force density" in the literature because it depends on the product between B and the gradient of B. Hereinafter, *F* is also named "gradient force", "force field", "force density" or "gradient field force".
Figure 4(a) shows the gradient force density resulting of a simulated application of an external magnetic field on the device of figure 3. The external magnetic field has a constant magnitude of $H_0 = 0.8$ Tesla and is applied in the longitudinal direction of the electrodes (direction X), namely perpendicularly to the planar ends 201, 211 of the electrodes 20, 21.
The inter-electrode distance $D_G$ (direction X) is of $D_G = 16$nm. The width W (direction Y) of the electrodes is of W = 30 nm and their height H (direction Z) is of H = 16 nm, and the electrodes have a length L (direction X) of L = 300 nm in the simulation. The shape of the electrodes is rounded, in order to avoid artificial divergence in the numerical calculations. For example, a width of W = 30 nm relates to a flat width of 20 nm, with rounded angles. This choice of set of values is restricted by the necessary meshing and is a compromise for limiting the calculation time.
The concentration c of Ni ions is c = 1 M and the simulation is made at ambient temperature (T = 300K). It is reminded that, at the ambient temperature, the molar magnetic susceptibility of the paramagnetic Ni$^{2+}$ ions is of about $\chi_m = 4.2*10^{-8}$ m$^3$.mol$^{-1}$. Given the concentration, it gives a product $c\chi_m = 4.2*10^{-5}$.
The simulation is carried out with a well-defined computer code (Finite Element/Boundary Element micromagnetic code), see handbook of Magnetism and Advanced Magnetic Materials, edited by Helmut Kronmüller and Stuart Parkin, vol. 2: Micromagnetism, 2007, John Wiley & sons, Ltd; article "Guided Spin waves", in particular in its chapter 2 entitled "Micromagnetism and Numerical Method"; by Riccardo Hertel from the Research Center Jülich (Jülich, Germany).
Given the orientation of the magnetic gradient force in figure 4(a), where the external field is along the electrodes axis directions, or the so-called longitudinal case; we note that a trap for the Ni$^{2+}$ ions is provided between the ends 201, 211 of the electrodes 20, 21. The paramagnetic Ni$^{2+}$ ions are then attracted between the electrodes 20, 21, which favors a direction of the redox reaction (CR) towards the creation of Ni$^{2+}$ ions, or dissolution of the Ni metal for producing electrons in the solution, and a new equilibrium Ni$^{2+}$/Ni. A comparison may be made with the trapping of the paramagnetic $H_2O^-$ ions near the surface electrode (Pt) in article D2 or D3.
However, the maximum magnitude of the gradient force density is of the order of $10^9$ N.m$^{-3}$. This value is five orders higher than that one obtained in D3 ($10^4$ N.m$^{-3}$). And even though a correction is made on the results of document D3 to take into account the differences in nature and concentration of the paramagnetic species between article D3 and the present simulation ($c\chi_m = 2 - 4.10^{-7}$ in article D3; $c\chi_m = 4.2*10^{-5}$ in the present simulation;), the gradient force density in D3 would be of the order of $10^6$ N.m$^{-3}$, namely 3 orders lower than the gradient force density obtained in the present simulation.
As the external magnetic field is comparable in the present simulation ($H_0 = 0.8$T) and article D3 (0.4 to 1T), it means that the electrodes 20, 21 allow generating very high values of the magnetic field gradient. Indeed, the maximum of the magnetic field gradient (dB/dz) is about $4.2*10^7$ T.m$^{-1}$ in the present simulation whereas it is about $10^5$ T.m$^{-1}$ in article D3.
According to the inventors, the high magnetic field gradient (dB/dz) is obtained due to the miniaturization of the electrodes 20, 21 themselves, and the proximity of the effect. The induction field B is scale invariant. The gradient is therefore inversely proportional to the scale. The gradient force field is therefore increasing by one order of magnitude when decreasing the size scale by one order of magnitude.

With this code, parametric tests have been carried out.

We found that increasing the length L of the electrodes has a negligible impact on the numerical outcome.

We also found that increasing the height H of the electrodes (thickness) does not change the results either.

Increasing the width W of the electrodes does not change significantly the maximum value of the force density (tested numerically up to 1 micron in the longitudinal case, but should mathematically remain valid up to infinite widths).

For the longitudinal case calculation ($H_0$ according to the X-direction; Fig. 4(a)), increasing the inter-electrode distance $D_G$ up to 1 micron does not diminish the forces estimates by more than one order of magnitude.

In practice, the important parameter is the inter-electrode distance $D_G$, which may then be between 1nm and $1\mu m$. Advantageously, said distance $D_G$ will be between 1nm and 500nm, between 1nm and 300nm or, preferably between 1nm and 100nm, this latter range being a range wherein the maximum value of the force field are similar to the results detailed above for the specific case $D_G$ = 16nm.

Consequently, convection of $Ni^{2+}$ towards the inter-electrode volume and their residency time are much more modified than in D3. The consequence is that the equilibrium constant K of the chemical reaction CR is changed significantly. The kinetics of the chemical reaction is therefore also changed significantly.

A real control of the chemical reaction can then be achieved.

Moreover, the inventors have noted that the control of the chemical reaction can be enhanced by controlling the orientation of the magnetic field induced in the ferromagnetic material.

Indeed, thanks to the above-mentioned code, the inventors show that the control of the orientation of the external magnetic field $H_0$ with respect to the electrodes 20, 21 has an impact on the direction of the chemical reaction.

A result of this study is shown in figure 4(b).

In figure 4(b), the conditions for the simulation are the same as for figure 4(a) except that the external magnetic field is applied in the transverse direction (direction Y), namely in a parallel manner with respect to the ends 201, 211 of the electrodes 20, 21.

In figure 4(b), similar values of the maximum magnetic field gradient (dB/dz) and the maximum magnitude of the gradient force density are obtained, compared to the simulation of figure 4(a).

However, we note that in figure 4(b) the orientation of the magnetic field brings about a repulsion of the $Ni^{2+}$ ions away from the inter-electrode area (gap).

For the chemical reaction CR, it means that the passage of the electrons located in the gap towards the Ni electrode will be promoted. The equilibrium constant of the chemical reaction CR will then change significantly.

This is counter-intuitive, as we expect that paramagnets should be attracted by ferromagnetic elements. This unexpected finding has never been reported in the literature. Furthermore, we found that the magnitude of the repulsive force is remarkably large, reaching the same order of magnitude as the attractive force field of Fig 4(a).

For the transverse case calculation ($H_0$ according to the Y-direction; Fig. 4(b)), when we vary the distance $D_G$ between the electrodes, we found that the maximum repulsive force field value remains of the same order of magnitude, but the volume where this force field is reached does not increase much with this distance $D_G$, and is in the middle between the electrodes. This means that the volume fraction of the gap where the force field is largest decreases with increasing distance between electrodes, but that there is still in the environment of the mid-distance area between the electrodes a high value of the repulsive force field.

It should be noted that the transverse can also be along the Z-direction as, in a first approximation, there is no difference between Z and Y.

From the results of figures 4(a) and 4(b), we finally note that the equilibrium constant K of the chemical reaction CR can be changed significantly, promoting either one side or the other of a chemical equilibrium reaction (figure 4(b)) or not (figure 4(a)).

This has interesting applications of the charge transfer properties of the two chemical by products related to the two sides of this chemical reaction are very different. In other words, one can reach the extreme case where one side relates to ions in solution ($Ni^{2+}$), and the other to a metal (Ni) separating the two electrodes.

The control of the orientation of the external magnetic field gives rise to remarkable electronic properties.

Indeed, when the forces exerted on the paramagnetic species are repulsive (figure 4(b)), electrons pass in a metallic bridge created between the electrodes 20, 21, closing the circuit (ON state; low-resistance interconnection). When the forces exerted on the paramagnetic species are attractive (figure 4(a)), the metallic bridge is dissolved, opening the circuit (OFF state; high-resistance interconnection).

A switch function can then be created between the electrodes 20, 21. This result is, from a qualitative point of view, summarized in figures 5(b) (ON state) and 5(a) (OFF state).

Measurements on an experiment set-up were made with the device of figure 3 to confirm that a switch function was effectively obtained, in the conditions in which the simulations were made.

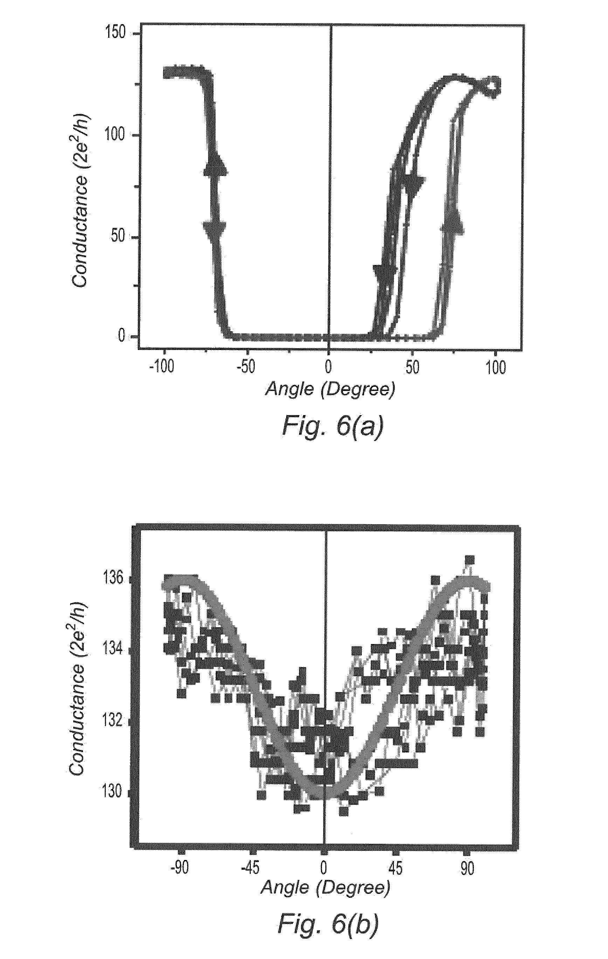

The results are given in figure 6(a).

To make a valuable comparison, measurements were also made without $Ni^{2+}$ in solution, which results are given in figure 6(b). This unambiguously shows that paramagnetic ions in solution are responsible, and necessary, for the magnetic-induced change of conduction.

Figures 6(a) and 6(b) provide the conductance of the electrodes 20, 21 as a function of the angle between the direction of the external magnetic field H = 0.8T and the longitudinal direction of the electrodes (X direction) in the (X, Y) plane. The conductance is expressed in quantum units. A value of 1 quantum unit corresponds to $2e^2/h$ (approximately 1/13 kOhms), where e is the charge of the electron and h the Planck's constant.

In figure 6(a), namely in presence of Ni ions in the solution, a great change in conductance is observed between the angle zero and the angle $\pm$ 90°. Where the angle is close to zero, the conductance is close to zero and corresponds to a resistance $R_{OFF}$ > 100k$\Omega$ (OFF state; figure 5(a); figure 4(a), attraction of the Ni ions). Where the angle is close to $\pm$90°, the conductance is quite high and corresponds to a resistance $R_{ON}$ = 100 $\Omega$ (ON state; figure 5(b); figure 4(b), repulsion of the Ni ions).

Now, if we pay attention to the results provided in figure 6(a), namely in the absence of Ni ions in solution, the variation of the conductance is negligible between the angle zero and the angle + 90° (or between the angle zero and the angle -90°).

The comparison between both figures clearly shows that it is the specific orientation of the external magnetic field $H_0$ with respect to the electrodes 20, 21 which brings about the electric switch behaviour between the electrodes.

Moreover, in both cases, the magnitude of the external magnetic field (constant) can be set to other values than $H_0$ = 0.8T in order to manage the magnetic field gradient force between the electrodes, namely the level of attraction/repulsion of the paramagnetic species.

As it is the case for the results described here above, we may dispose magnets capable of creating an external magnetic field $H_0$ which orientation changes from the X-direction to the Y-direction, and conversely in order to manage the orientation of the induced magnetic field B with respect to the electrodes 20, 21. As already mentioned previously, a set of mutually perpendicular solenoid-type coils is capable of orienting the applied field in any direction in space. An alternative is a mechanical rotation of a single coil system. A mechanical rotation of a permanent magnet or an ensemble of permanent magnets can reach the same goal. Finally, it is also possible to rotate the sample itself, namely the device 100. The force field behaviour in the Z-direction is similar to the one in the Y-direction, so we can generalize as an orientation change between longitudinal (X) and transverse (in the YZ plane) directions.

The induced magnetic field B near the ferromagnetic electrodes may be changed otherwise.

Indeed, in that aim, we may apply an external magnetic field for example in the Y-direction which magnitude is varying over time. Due to the magnetic properties of the electrodes, the induced magnetization of the ferromagnetic electrodes 20, 21 will generate a component in the X-direction which magnitude is dependent from the magnitude of the external magnetic field, as shown hereinafter.

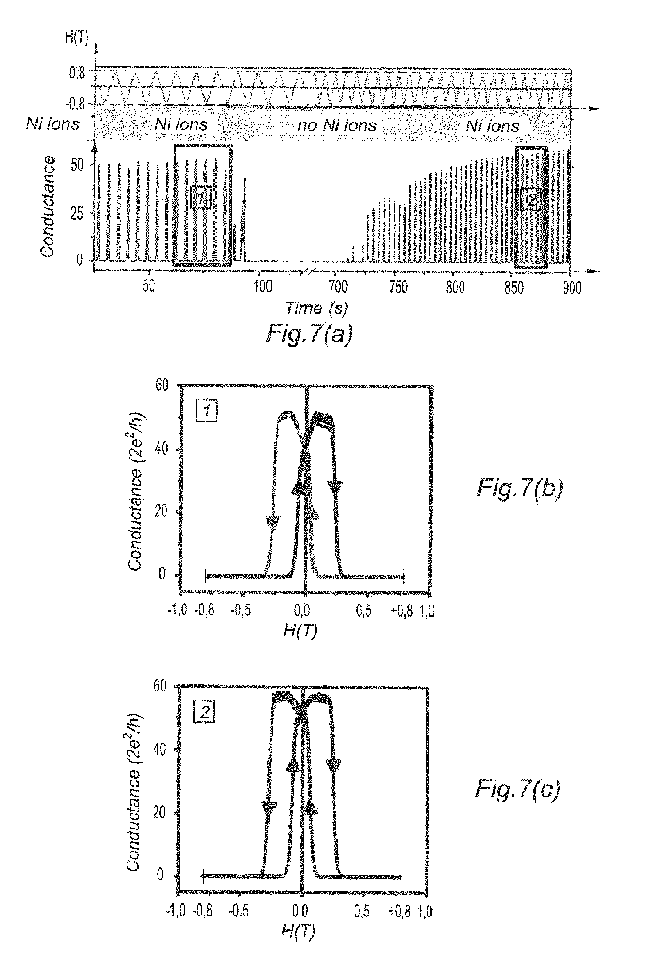

Figure 7(a) shows, in the upper part, the evolution of the magnitude of the external magnetic field ($H_0$ = $\pm$ 0.8T) as a function of time, in the middle part, the presence/absence of Ni ions in the solution and, in the lower part, the conductance obtained between the ferromagnetic electrodes in response to the evolution of the magnitude of said external magnetic field H.

Between t= 0s and 90s, Ni ions are present in the solution. The magnitude of the external magnetic field $H_0$ is changed over time at a first rate. We can see that the conductance changes with the evolution of the magnitude of the external magnetic field. The periodic evolution of said magnitude between its extreme values (+0.8T; -0.8T) results in the successive activation of the ON state (close to the extreme values of $H_0$) and of the OFF state (when $H_0$ has intermediate small values between the extreme values; especially when $H_0$ is close to zero) of the switch. Moreover, the activation frequency of the switch is twice as the frequency variation of the magnitude of the external magnetic field.

Between t = 90s and 700s, there is no Ni ions in the solution. The magnitude of the external magnetic field $H_0$ is changed over time from a first rate to a second rate, which is higher than the first rate. In that case, no evolution of the conductance is observed, whatever the rate of the magnitude change. Eliminating Ni ions in the solution results in an open contact (OFF state). These results are similar to those observed in figure 6(b).

Beyond t = 700s, Ni ions are present in the solution. The magnitude of the external magnetic field H is changed over time at the second rate. We also observe that conductance changes over time, additionally still at a frequency which is twice as important as the evolution of said magnitude.

Figures 7(b) and 7(c) relates to magnetoresistance curves which correspond to time zones 1 and 2 of figure 7(a). To obtain these figures, time is eliminated from the results showed in figure 7(a), one therefore obtain the evolution of the sample resistance (or conductance) with the magnitude of an external applied field $H_0$. These figures show that very large resistance changes under variable applied magnetic field are obtained and that these properties are recovered (zone 2) when reinstating the initial (zone 1) electrochemical environment (presence of Ni ions).

It is reminded that the electric switch controlled by an external magnetic field is the basic element of a spin valve. And this basic element has ON/OFF ratio $R_{OFF}/R_{ON} \geq$ 1000, which is much higher than the currently used solid-states devices used as basic elements for spin valves, which generally provide an ON/OFF ratio strictly lower than 2.

Having a means for applying an external magnetic field which magnitude is either constant (with a constant orientation or not) or variable with time is not compulsory.

Indeed, for some electrodes having strong ferromagnetic properties, it is possible to magnetize them and to take advantage of the remanence properties of these electrodes. In that case, we may imprint, prior to chemical processing, the stability of the chemical reaction (equilibrium constant). For example, we may obtain an induced magnetic field B very near the electrodes of amplitude in the range 0.1 T to 2.5 T, depending on the magnetic material used for the electrodes.

The chemical reaction CR can be extended to any chemical reaction of the redox type:

$$M^{n+} \text{ (paramagnetic species)} + ne^- \leftrightarrow M$$

with M = Ni, Co, Fe, Cu, Ag, Au, Pt, Cr; the condition being that it experiences a reduction reaction at a metallic electrode. Their metallic state, or their alloyed metallic state, should fulfil the condition of being magnetic.

the local magnetic induction field B is of the order of the saturation magnetization ($M_s$). For a Ni electrode, $M_s = 0.62$T.

However, this value may be higher.

For example for an iron-based electrode, $M_s$ reaches 2.4 T.

In addition, it should be noted that the magnetic field B (and its derivative dB/dz) increase the magnetization of the electrodes. Indeed, both are proportional to M inside the magnetic electrodes, and approximately proportional outside, as the magnetic field created by the magnetic electrodes is proportional to M. The gradient force value will therefore scale with $(M_s)^2$, If we replace Ni by Fe, with an increase of a factor 4 of the magnetization value, an average increase of a factor 10 to 16 will be found for the magnitude of the gradient force.

The consequence is that, for the same conditions, higher force field gradients may be obtained. A similar result is obtained with cobalt-based electrodes. Indeed, Fe and Co have stronger ferromagnetic properties than Ni.

From the magnitude of our observations on the redox reaction of $Ni^{2+}$ ions, the opening and closure of the bridge can alternatively be obtained if we modify the applied voltage on the two electrodes (versus a reference electrode in the circuit), by more than 100 mV. This provides an estimate to the contribution of the Gibbs free energy of 0.1 eV per molecule. This indicates that the invention is not limited to chemical reactions of the redox type.

Indeed, the invention may be extended to chemical reactions that involve building supramolecular architectures (supramolecular architectures may be defined as an ensemble of molecules linked by weak interactions, typically of the order of 0.01eV to 0.2eV per molecule), where the equilibrium conditions can be significantly altered by energy contributions of the order of $k_B T$ (thermal energy; 0.03ev at room temperature). In that case, the paramagnetic species are the molecules of the assembly. If chemical bounds involve paramagnetic species, as radicals, ions or radical ions, the variation in energy related to the magnetic field force gradient acting on the molecules might stabilize or destabilize the supramolecular architecture It is important because supramolecular molecules prevail in life science.

The invention may also be extended to other chemical reactions in which a radical intervenes, such as radical polymerization where a chemical reaction initiated by a radical monomer controls the characteristics of the polymeric chain. The radical plays then the role of the paramagnetic species.

As mentioned previously, other shapes for the electrodes 20, 21 can be used, for example the arrow-shaped electrodes of figures 1(c). For arrow shaped-electrodes, one expect to enhance further the gradient force, following simple macroscopic arguments that a conical-type shape increase the magnetic field density (especially at the level of its ends 201, 211; see figure 1(c)), and therefore the induction field B and its gradient (dB/dz) created by the magnetization (M) of the electrodes.

According to the type of chemical reactions concerned, high magnetization magnetic materials such as Fe or Co alloys, or even rare earth materials (ex.: Gd, Eu, Sm) or their alloys may be used, which can potentially increase the value of the saturation magnetization ($M_s$) by a factor up to five.

It should be noted that the device 100 according to the invention works in solution and can therefore be used for bio-applications, especially if the ferromagnetic materials of the electrodes are covered by a non-ferromagnetic biocompatible material (ex.: a metal) with a small thickness, typically a few nanometres (nm) and not exceeding 40 nm.

Indeed, it should be noted that very large gradient field forces can occur in the vicinity of a single electrode. As a simple rule of thumb, the estimated attractive or repulsive forces are diminished by a factor two when the second electrode is positioned infinitely far from the first one. If we use a criterion of magnetic force field one order of magnitude larger than those reported in document D3 (namely a value of $10^7$ N.m$^{-3}$ for the present invention; as for D3 it would be of the order of $10^6$ N.m$^{-3}$ for a similar value of the product $c\chi_m$), we estimate from our calculations that this force field exists within a distance of the order of 40 nm from the edge of an electrode. A distance reduced to 20 nm results in a force field one order of magnitude larger (namely $10^8$ N.m$^{-3}$ for the present invention).

When a non-ferromagnetic cover layer, for example a biocompatible metal layer, is added on the surface of the electrodes, it is therefore essential to reduce its thickness below 40 nm. Accordingly, the thickness of the non-ferromagnetic cover layer should lie in the range 1nm to 40nm or, advantageously, 1 nm to 20nm.This fact was not considered previously in the literature, where the smallest values of thickness of non-ferromagnetic protecting layers

**EP 2 868 373 A1**

reported are between 50nm and 200 nm. For instance, in document D3, the electrode is covered by a Pt layer (non-ferromagnetic) which thickness is of 50 nm.

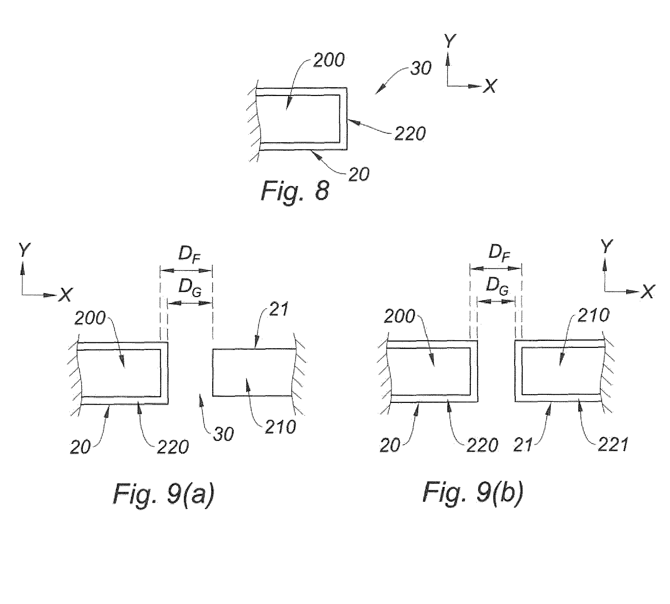

For illustration purposes, figure 8 shows a single electrode 20 with its ferromagnetic material 200 covered by a layer 220 made of a non-ferromagnetic material, for example biocompatible. We can see that the ferromagnetic material 200 cannot be in contact with the solution 30, the cover layer 220 separating the ferromagnetic material 200 from the solution 30 in which the electrode 20 is dived.

Of course, the device with a single electrode also works in the absence of non-ferromagnetic cover layer.

As already mentioned previously, , when two electrodes 20, 21 are present, both of them can be free of a non-ferromagnetic cover layer, the ferromagnetic material 200, 210 of each electrode 20, 21 being then in direct contact with the solution 30 (figure 3). The inter-electrode distance $D_G$ is then the distance $D_F$ between the ferromagnetic materials 200, 210 of the electrodes.

However, we may have one 21 of them which is free of such a cover layer while the other 20 comprises such a cover layer 220 with a thickness less than 40nm (see figure 9(a)).

We may also provide a cover layer 220, 221 of this type on the two electrodes 20, 21 (see figure 9(b)).

In those cases, the relevant distance which has to be taken into account is the distance $D_F$ between the ends of the ferromagnetic materials 200, 210 of the electrodes 20, 21, which does not correspond to the inter-electrode distance $D_G$ given the existence of a cover layer ($D_F > D_G$) . For instance, if both electrodes have a cover layer of 20nm; we may have an inter-electrode distance $D_G$ of 60nm and a distance between the ferromagnetic materials of the electrodes which is of 100 nm (= 20nm (cover layer; electrode 20) + 60nm (in the solution) +20 nm (cover layer; electrode 21)).

Where, both electrodes 20, 21 have a cover layer 220, 221, these cover layers may be made with the same materials or not and/or may have a same thickness or not.

**Claims**

1. A device (100) for controlling a chemical reaction, said device having:

   - a container (13) comprising a solution (30) including at least one paramagnetic species;
   - at least one electrode (20, 21) comprising at least one ferromagnetic material (200, 210), said at least one electrode being dived in said solution;
   - a means for applying an external magnetic field ($H_0$) so as to magnetize said electrode (20, 21), the combination of the external magnetic field ($H_0$) and the magnetization (M) of said electrode creating a magnetic induction field (B) in the electrodes (20, 21) and the container (13);

   **characterized in that** said at least one electrode (20, 21) has either no cover layer of a non-ferromagnetic material on said at least one ferromagnetic material or comprises a cover layer of a non-ferromagnetic material separating said at least one ferromagnetic material from the solution (30), the thickness of the cover layer being less than 40nm.

2. A device (100) according to claim 1, comprising at least two electrodes (20, 21) each comprising at least one ferromagnetic material, said electrodes being dived in said solution (30), where:

   - both electrodes (20, 21) have no cover layer of a non-ferromagnetic material on the corresponding said at least one ferromagnetic material; or
   - both electrodes (20; 21) have a cover layer (220, 221) of a non-ferromagnetic material separating the corresponding said at least one ferromagnetic material (200, 210) from the solution (30), the thickness of each cover layer (220, 221) being less than 40nm; or
   - one and only one (20) of the two electrodes (20, 21) has a cover layer (220) of a non-ferromagnetic material separating said at least one ferromagnetic material (200, 210) from the solution (30), the thickness of the cover layer (220) being less than 40nm;

   the ends (201, 211) of said electrodes (20, 21) being further disposed face to face, so that the distance ($D_F$) between the corresponding ferromagnetic materials (200, 210) of the electrodes is comprised between 1 nm and 1 $\mu$m.

3. A device (100) according to the preceding claim, wherein the distance ($D_F$) between the corresponding ferromagnetic materials (200, 210) of the electrodes (20, 21) is comprised between 1nm and 100nm.

4. A device according to one of the preceding claims, wherein said means (101, 102) for applying the external magnetic field ($H_0$) are adapted for changing the orientation of the magnetization (M) in said at least one electrode.

5. A device (100) according to the preceding claims, wherein said means (101, 102) for applying an external magnetic field ($H_0$) are adapted for varying the magnitude of said external magnetic field ($H_0$), in order to change the orientation of the magnetization (M) in said at least one electrode.

6. A device (100) according to one of the claims 3 or 4, wherein said means (101, 102) for applying an external magnetic field ($H_0$) are adapted for changing the direction of said external magnetic field ($H_0$), in order to change the orientation of the magnetization (M) in said at least one electrode.

7. A device (100) according to one the preceding claims, wherein, when a cover layer of a non-ferromagnetic material separating said at least one ferromagnetic material of the or each electrode (20, 21) from the solution (30) is provided, the thickness of said cover layer is than 20nm.

8. A device (100) according to one of the preceding claims, wherein the end (201, 211) of said at least one electrode (20, 21) is planar or arrow-shaped.

9. A device (100) according to one of the preceding claims, wherein said means (101, 102) for applying the external magnetic field ($H_0$) is an electromagnet, a superconducting magnet or at least one permanent magnet.

10. A device (100) according to the preceding claim, wherein, the ferromagnetic material of said at least one electrode (20, 21) has remanence properties.

11. A device (100) according to one of the preceding claim, wherein the external magnetic field ($H_0$) does not exceed 5T.

12. A device (100) according to one of the preceding claims, wherein the ferromagnetic material is a metal, a metal alloy or a rare earth material such as Gd, Eu or Sm.

13. Use of a device according to one of the claims 1 to 12 in order to control the equilibrium constant of a chemical reaction and/or the kinetics of said chemical reaction.

14. Use of a device according to one of the claims 2 to 12 as an electrical switch, providing an ON/OFF ratio $R_{OFF}/R_{ON}$ greater than 2, for example greater than 10; where $R_{OFF}$ is the interconnection resistance between the electrodes in the OFF position of the switch and $R_{ON}$ is the interconnection resistance between the electrodes in the ON position of the switch.

15. Use according to the preceding claim, wherein the ON/OFF ratio is greater than 100, for example greater than 1000.

Fig. 1(b)

Fig. 1(a)

Fig. 1(c)

Fig. 2

Fig. 3

$Ni^{2+} + 2e^- \rightleftharpoons Ni$

Fig. 4(a)

$Ni^{2+} + 2e^- \rightleftharpoons Ni$

Fig. 4(b)

$H_O = 0.8T$    OFF

Fig. 5(a)

$H_O = 0.8T$    ON

Fig. 5(b)

Fig. 6(a)

Fig. 6(b)

Fig.7(a)

Fig.7(b)

Fig.7(c)

Fig. 8

Fig. 9(a)

Fig. 9(b)

Europäisches
Patentamt

European
Patent Office

Office européen
des brevets

## EUROPEAN SEARCH REPORT

Application Number

EP 13 30 6516

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 845 298 A1 (COMMISSARIAT ENERGIE ATOMIQUE [FR]) 9 April 2004 (2004-04-09)<br>* page 1, lines 7-11,21-26 *<br>* page 4, line 30 - page 7, line 8 *<br>* figures 1,2 * | 1-15 | INV.<br>B01J19/00<br>B01J19/08 |
| X | US 3 409 471 A (STURM FERDINAND V ET AL) 5 November 1968 (1968-11-05)<br>* column 1, lines 26-32 *<br>* column 1, line 57 - column 2, line 39 *<br>* column 3, line 23 - column 4, line 8 *<br>* column 6, lines 32-39 *<br>* claims 1,7 *<br>* examples 1,6 *<br>* figures 1,3 * | 1-15 | |
| X | PEROV N S ET AL: "An electro-chemical magnetic field sensor",<br>SENSORS AND ACTUATORS A, ELSEVIER SEQUOIA S.A., LAUSANNE, CH,<br>vol. 81, no. 1-3,<br>1 April 2000 (2000-04-01), pages 351-354, XP004191323,<br>ISSN: 0924-4247, DOI:<br>10.1016/S0924-4247(99)00109-0<br>* paragraph 2. "Experimental" *<br>* figure 1 * | 1-15 | TECHNICAL FIELDS SEARCHED (IPC)<br><br>B01J<br>B01L<br>G01N<br>B03C |
| X | US 2011/027623 A1 (COEY JOHN MICHAEL DAVID [IE]) 3 February 2011 (2011-02-03)<br>* paragraphs [0006] - [0009], [0042] - [0048], [0055], [0060], [0090], [0091], [0109] - [0113], [0118], [0119] *<br>* figures 1,2; table 1 * | 1-15 | |

-/--

The present search report has been drawn up for all claims

| Place of search | Date of completion of the search | Examiner |
|---|---|---|
| The Hague | 28 May 2014 | Baumlin, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 13 30 6516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & N. B. CHAURE ET AL: "Enhanced Oxygen Reduction at Composite Electrodes Producing a Large Magnetic Gradient", JOURNAL OF THE ELECTROCHEMICAL SOCIETY, vol. 156, no. 3, 8 January 2009 (2009-01-08), pages F39-F46, XP055120662, ISSN: 0013-4651, DOI: 10.1149/1.3000576 ----- | | |
| A | RESSIER ET AL: "Fabrication of planar cobalt electrodes separated by a sub-10nm gap using high resolution electron beam lithography with negative PMMA", ULTRAMICROSCOPY, ELSEVIER, AMSTERDAM, NL, vol. 107, no. 10-11, 27 July 2007 (2007-07-27), pages 985-988, XP022174234, ISSN: 0304-3991, DOI: 10.1016/J.ULTRAMIC.2007.04.013 * the whole document * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 28 May 2014 | Baumlin, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 30 6516

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2014

| Patent document cited in search report | | Publication date | Patent family member(s) | | Publication date |
|---|---|---|---|---|---|
| FR 2845298 | A1 | 09-04-2004 | EP | 1407812 A1 | 14-04-2004 |
| | | | FR | 2845298 A1 | 09-04-2004 |
| | | | JP | 2004136284 A | 13-05-2004 |
| | | | US | 2004114458 A1 | 17-06-2004 |
| US 3409471 | A | 05-11-1968 | CH | 457377 A | 15-06-1968 |
| | | | DE | 1209112 B | 20-01-1966 |
| | | | FR | 1399119 A | 14-05-1965 |
| | | | GB | 1018348 A | 26-01-1966 |
| | | | NL | 6406694 A | 21-12-1964 |
| | | | US | 3409471 A | 05-11-1968 |
| US 2011027623 | A1 | 03-02-2011 | NONE | | |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- High magnetic fields in chemistry. **U.E. STEINER ; P. GILCH.** High Magnetic Fields. World Scientific, 2003
- Thermodynamic equilibrium. 18-19
- **N.B. CHAURE.** Design and application of a magnetic field gradient electrode. *Electrochemistry Communications,* 2007, vol. 9, 155-158
- Enhanced Oxygen Reduction at Composite Electrodes Producing a Large Magnetic Gradient. *J. of the Electrochemical Society,* 2009, vol. 156 (3), F39-F46
- **LUNCA POPA.** Heteronanojunctions with atomic size control using a lab-on-chip electrochemical approach with integrated microfluidics. *Nanotechnology,* 2011, vol. 22 (215302), 1-7
- **J.F. DAYEN.** *Nanotechnology,* 2010, vol. 21, 335303
- handbook of Magnetism and Advanced Magnetic Materials. Micromagnetism. John Wiley & sons, Ltd, 2007, vol. 2
- Guided Spin waves. **RICCARDO HERTEL.** Micromagnetism and Numerical Method